# EUROPÄISCHE PATENTSCHRIFT

(11) **EP 1 318 716 B1**
(45) Veröffentlichungstag und Bekanntmachung des Hinweises auf die Patenterteilung: **15.06.2005**
(21) Anmeldenummer: 01972019.2
(22) Anmeldetag: 07.09.2001
(51) Int. Cl.: A01J 5/007

(54) **VERFAHREN ZUM MASCHINELLEN MELKEN EINES TIERES**
METHOD FOR MACHINE MILKING AN ANIMAL
PROCEDE POUR TRAIRE A LA MACHINE UN ANIMAL

(30) Priorität: 18.09.2000 DE 10046038
(43) Veröffentlichungstag der Anmeldung: 18.06.2003
(73) Patentinhaber: WestfaliaSurge GmbH, 59302 Oelde (DE)
(72) Erfinder: EBELING, Michael, 32657 Lemgo-Kirchheide (DE); SCHULZE WARTENHORST, Bernhard, 48231 Warendorf (DE); SUHR, Olaf, 59302 Oelde (DE)
(74) Vertreter: Neumann, Ditmar
(86) Internationale Anmeldenummer: PCT/EP2001/010329
(87) Internationale Veröffentlichungsnummer: WO 2002/021907

(56) Entgegenhaltungen:
- EP-A- 0 032 752
- WO-A-95/23501
- DE-A- 3 621 666

## Beschreibung

Der Gegenstand der Erfindung bezieht sich auf ein Verfahren zum maschinellen Melken eines Tieres, insbesondere einer Kuh, mit den Merkmalen des Oberbegriffs des Anspruchs 1.

Durch die EP 0 032 752 A1 ist ein Verfahren zum maschinellen Melken eines Tieres, insbesondere einer Kuh, bekannt, bei dem einer Melkphase eine Stimulati onsphase vorgeschaltet ist, wobei während einer Zeit von 40 bis 90 Sekunden ab Beginn dieser Stimulationsphase keine Milch entzogen und erst unmittelbar hieran anschließend mit dem Milchentzug begonnen wird. Dieser Verfahrensführung liegt die Überlegung zugrunde, daß mit dem Milchentzug erst dann begonnen werden darf, wenn das Tier durch eine vollwertige Milchejektion und einen noch hohen Euterinnendruck melkbereit und melkinteressiert gemacht wurde.

Jede Milchtierrasse und jedes Tier reagiert auch abhängig vom Laktationsstadium auf die vorgenommene Stimulation sehr unterschiedlich, so daß die Dauer von 40 bis 90 Sekunden, während der im wesentlichen kein Milchentzug stattfindet, ein Kompromiß für alle Tiere darstellt. In der Praxis wurde festgestellt, daß es auch zu negativen Reaktionen bei den Tieren durch eine Überstimulation kommen kann. Besonders deutlich treten solche Erscheinungen zu Beginn der Laktation eines Tieres auf Am Anfang der Laktationsphase des Tieres ist das Produktionsniveau sehr hoch, so daß eine Überstimulation durch lange Stimulationszeiten zu einer Beeinträchtigung des Milchabgabeverhaltens des Tieres führen kann.

Ein vergleichbares Problem tritt in der Endphase der Laktation auf, wenn die Stimulationsphase zu kurz gewählt ist.

Durch die DE 36 21 666 A1 ist bereits ein Verfahren zum maschinellen Melken eines Tieres bekannt, bei dem die Dauer der Stimulationsphase und das zeitliche Verhältnis von Reizphase und Ruhephase in Abhängigkeit vom unterschiedlichen Stimulationsbedürfnis der zu melkenden Tiere festgelegt ist und damit eine tierindividuelle Stimulation erfolgt. Bei der tierindividuellen Stimulation wird das Laktationsstadium des Tieres berücksichtigt.

Hiervon ausgehend liegt der vorliegenden Erfindung die Zielsetzung zugrunde, das gattungsgemäße Verfahren so weiterzubilden, daß die Melkbereitschaft des Tieres noch weiter erhöht wird.

Diese Zielsetzung wird erfindungsgemäß durch ein Verfahren mit den Merkmalen des Anspruchs 1 erreicht. Vorteilhafte Weiterbildungen und Ausgestaltungen des Verfahrens sind Gegenstand der abhängigen Ansprüche.

Das erfindungsgemäße Verfahren zum maschinellen Melken eines Tieres, insbesondere einer Kuh, bei dem einer Hauptmelkphase eine Stimulationsphase vorgeschaltet ist, wobei ab Beginn der Stimulationsphase im wesentlichen keine Milch entzogen wird, zeichnet sich dadurch aus, daß während der gesamten Stimulationsphase im wesentlichen keine Milch entzogen und die Dauer der Stimulationsphase in Abhängigkeit von einer prognostizierten Menge der Zisternenmilch und/oder der Alveolarmilch bestimmt wird.

Das erfindungsgemäße Verfahren berücksichtigt die geänderten Rahmenbedingungen der Tierhaltung und der Melkhäufigkeit. Durch den Einsatz automatischer Melksysteme wird dem Tier, insbesondere einer Kuh, die Möglichkeit gegeben, selbständig bis zu sechs mal täglich ein automatisches Melksystem aufzusuchen. In einer solchen Situation, wenn das übliche zweimalige Melken pro Tag auf häufigeres Melken umgestellt wird, ist festzustellen, daß die bisherige Verfahrensführung zum maschinellen Melken nicht mehr greift. Hier kommt es zu einem Mangel an vorliegender Zisternenmilch im Euter. Dies führt dazu, daß die dazu geschaffenen Stimulationszeiten zur Freisetzung von Oxytoxin nicht mehr ausreichen, um ein kontinuierliches Melken ohne Milchflußeinbruch zu gewährleisten. In der Praxis ist dabei zu beobachten, daß nach einer entsprechenden Stimulation zwar im ersten Moment genügend Zisternenmilch vorliegt und somit die Melkphase eingeleitet werden kann, nach einer kurzen Zeitspanne jedoch die Zisternenmilch vollständig abgemolken wurde, jedoch aus dem Drüsenbereich, die Alveolarmilch noch nicht melkmaschinenverfügbar ist. Daraus resultiert ein stark zum Teil bis auf Null zurückgehender Milchfluß mit dem Phänomen, daß nun Vakuum über die Zitzen in das Euter eindringen kann, Schmerzen verursacht und so ein Unwohlsein des Tieres nach sich zieht. Das Tier wird durch das Eindringen von Vakuum in das Euter derart negativ beeinflußt, daß die Melkwilligkeit deutlich abnimmt. Diesem Phänomen wirkt das erfindungsgemäße Verfahren entgegen. Dadurch, daß während der gesamten Stimulationsphase im wesentlichen keine Milch abgezogen wird, wird sichergestellt, daß die Zisternenmilch nicht abgemolken wird. Die Dauer der Stimulationsphase ist variabel in Abhängigkeit von einer zu erwartenden Menge der Zisternenmilch und/oder der Alveolarmilch bestimmt. Hierdurch wird auch die Laktationsphase des Tieres berücksichtigt. Bei relativ hohen Milchabgaben kann die Stimulationsphase kurz sein. Mit zunehmend geringer werdender Milchmenge kann die Dauer der Stimulationsphase gesteigert werden.

Insbesondere wird vorgeschlagen, daß für die Bestimmung der Dauer der Stimulationsphase die Zeitspanne zwischen wenigstens zwei aufeinanderfolgenden Melkvorgängen berücksichtigt wird.

Bei hohem Produktionsniveau des Tieres ist der prozentuale Anteil der Zisternenmilch sowohl die absolut vorliegende Menge an Zisternenmilch günstiger zu bewerten als zum Ende der Laktation, wenn das Produktionsniveau deutlich geringer ist. Wird die Häufigkeit des Melkens geändert, so sinkt sowohl zu Beginn der Laktation bei hohem Produktionsniveau als auch gegen Ende der Laktation der Anteil der Zisternenmilch deutlich. Dies führt dazu, daß bei kürzeren Zwischenmelkzeiten eine längere Zeit stimuliert werden muß, um durch Oxytoxinfreisetzung Alveolarmilch in den Zisternenbereich zu bekommen und so ein ungestörtes Melken verwirklichen zu können.

Dies wird vorzugsweise dadurch erreicht, daß während der Stimulationsphase die Frequenz der Pulsation bei gleichzeitiger Verringerung der Druckwechselgeschwindigkeit, die eine Vakuumreduzierung im Melkbecherzwischenraum bewirkt, verwirklicht. Durch diese vorteilhafte Verfahrensführung wird sichergestellt, daß das Zitzengummi wenigstens nahezu geschlossen ist, so daß im wesentlichen kein Abmelken der Zisternenmilch erfolgt.

Kein Abmelken von Milch während der Stimulationsphase wird gemäß einer weiteren vorteilhaften Weiterbildung des Verfahrens dadurch erreicht, daß während der Stimulationsphase eine Phasenverschiebung der Vakuumphase erfolgt.

Gemäß einer noch weiteren vorteilhaften Ausgestaltung des Verfahrens wird vorgeschlagen, daß während der Stimulationsphase die Frequenz der Pulsation erhöht wird.

Die Stimulationsphase kann auch einen Stimulationsabschnitt mit erhöhter Frequenz bei nahezu geschlossenem Zitzengummi mit einer Reizung beinhalten, jedoch nach einer vorgegebenen Zeit die Frequenz auf Null heruntergefahren wird und danach eine Wartezeit erfolgt, in der keine Milch entzogen wird.

Die Wirkung der Stimulationsphase wird vorzugsweise während der Hauptmelkphase überprüft. Dies kann durch geeignete Meßgeräte erfolgen. Insbesondere wird vorgeschlagen, daß der Milchfluß beziehungsweise die Milchflußmenge über die Zeit gemessen wird. Diese Daten können Ausgangsdaten zur Bestimmung der Stimulationsphase für einen weiteren Melkvorgang des betreffenden Tieres herangezogen werden. Diese Werte können durch entsprechende Korrekturfaktoren, die beispielsweise die Laktation berücksichtigen, beinhalten.

## Patentansprüche

1. Verfahren zum maschinellen Melken eines Tieres, insbesondere einer Kuh, bei dem einer Hauptmelkphase eine Stimulationsphase vorgeschaltet ist, wobei ab Beginn der Stimulationsphase im wesentlichen keine Milch entzogen wird, **dadurch gekennzeichnet, daß** die Dauer der Stimulationsphase in Abhängigkeit von der zu erwartenden Menge der Zisternenmilch und/oder der Alveolarmilch bestimmt wird.

2. Verfahren nach Anspruch 1, **dadurch gekennzeichnet, daß** die Dauer der Stimulationsphase in Abhängigkeit von einer Zeitspanne zwischen wenigstens zwei aufeinander folgenden Melkvorgängen bestimmt wird.

3. Verfahren nach Anspruch 1 oder 2, **dadurch gekennzeichnet, daß** während der Stimulationsphase die Frequenz der Pulsation bei gleichzeitiger Verringerung der Druckwechselgeschwindigkeit erhöht wird.

4. Verfahren nach Anspruch 1 oder 2, **dadurch gekennzeichnet, daß** während der Stimulationsphase eine Phasenverschiebung der Vakuumphase (B-Phase) erfolgt.

5. Verfahren nach Anspruch 4, **dadurch gekennzeichnet, daß** während der Stimulationsphase die Frequenz der Pulsation erhöht wird.

6. Verfahren nach einem der Ansprüche 1 bis 6, **dadurch gekennzeichnet, daß** nach einer Passivmelkphase mit erhöhter Frequenz der Pulsation eine Reizsetzung, vorzugsweise auf einzelnen Melkbechern, erfolgt.

## Claims

1. Method for machine milking of an animal, in particular for a cow, in which a stimulation phase precedes a main milking phase, wherein from the beginning of the stimulation phase substantially no milk is withdrawn, **characterized in that** the duration of the stimulation phase is determined depending on the expected quantity of the cistern milk ("Zisternenmilch") and/or the alveolar milk.

2. Method according to claim 1, **characterized in that** the duration of the stimulation phase is determined depending on the time period between at least two processes succeeding one another.

3. Method according to claim 1 or 2, **characterized in that** during the stimulation phase the frequency of the pulsation is increased while the rate of pressure change decreases.

4. Method according to claim 1 or 2, **characterized in that** a phase shift of the vacuum phase (B-phase) is performed during the stimulation phase.

5. Method according to claim 4, **characterized in that** the frequency of the pulsation is increased during the stimulation phase.

6. Method according to one on claims 1 to 6, **characterized in that** after a passive milking phase with increased frequency of the pulsation an excitation is performed, preferably on individual teat cups.

## Revendications

1. Procédé de traite mécanique d'un animal, notamment d'une vache, dans lequel une phase de traite principale est précédée d'une phase de stimulation, dès le début de la phase de stimulation du lait n'étant sensiblement pas retiré, **caractérisé en ce que** la durée de la phase de stimulation est déterminée en fonction de la quantité de lait de citerne et/ou de lait alvéolaire à attendre.

2. Procédé selon la revendication 1, **caractérisé en ce que** la durée de la phase de stimulation est déterminée en fonction de la période de temps entre au moins deux processus de traite se succédant.

3. Procédé selon la revendication 1 ou 2, **caractérisé en ce que** durant la phase de stimulation la fréquence de la pulsation est augmentée en même temps que la vitesse de changement de pression est baissée.

4. Procédé selon la revendication 1 ou 2, **caractérisé en ce qu'**un déplacement de phase de la phase à vide (B-Phase) est effectué durant la phase de stimulation.

5. Procédé selon la revendication 4, **caractérisé en ce que** durant la phase de stimulation la fréquence de la pulsation est augmentée.

6. Procédé selon l'une des revendications 1 à 6, **caractérisé en ce qu'**après une phase de traite passive à fréquence plus élevée de la pulsation une excitation est effectuée, de préférence sur des gobelets trayeurs individuels.
